# EUROPÄISCHE PATENTSCHRIFT

(11) **EP 3 234 280 B1**
(45) Veröffentlichungstag und Bekanntmachung des Hinweises auf die Patenterteilung: **19.12.2018**
(21) Anmeldenummer: 16788139.0
(22) Anmeldetag: 31.10.2016
(51) Int. Cl.: E04F 15/10, B44C 5/04

(54) **PANEEL UND EINE MEHRZAHL DERARTIGER PANEELE UMFASSENDES PANEELGEBINDE**
PANEL AND PANEL ASSEMBLY COMPRISING A PLURALITY OF SUCH PANELS
PANNEAU ET ENSEMBLE DE PANNEAUX COMPORTANT UNE PLURALITÉ DE CES PANNEAUX

(30) Priorität: 02.11.2015 DE 102015221420; 10.11.2015 DE 102015222111
(43) Veröffentlichungstag der Anmeldung: 25.10.2017
(73) Patentinhaber: KAINDL FLOORING GmbH, 5071 Wals (AT)
(72) Erfinder: DÜRNBERGER, Gerhard, 5204 Strasswalchen (AT)
(74) Vertreter: Weickmann & Weickmann PartmbB
(86) Internationale Anmeldenummer: PCT/EP2016/076204
(87) Internationale Veröffentlichungsnummer: WO 2017/076794

(56) Entgegenhaltungen:
- WO-A1-02/090129
- WO-A1-2004/063491
- WO-A2-2006/067642
- CH-A- 446 679

## Beschreibung

Die Erfindung betrifft ein rechteckiges und zum Verkleiden eines Untergrunds bestimmtes Paneel, welches ein Basiselement umfasst, das an seiner vom Untergrund abgewandten Sichtfläche ein Dekor aufweist, wobei das Dekor eine Mehrzahl von parallelogramm-förmigen Riemchen darstellt, wobei das eine Paar von Parallelogramm-Seiten jeweils einen Abschnitt der Längsseite des Paneels bildet, während die beiden anderen Seiten des Parallelogramms zur Längsrichtung des Paneels schräg verläuft.

Aus der DE 201 01 021 U1 sind Paneele bekannt, die bei entsprechender Verlegung die Anmutung eines Fischgrät-Parkettbodens ergeben.

Darüber hinaus wird in der DE 201 01 021 U1 ohne Quellenangabe noch ein weiterer Stand der Technik erörtert, bei dem das Dekor der Paneele spitzwinkelig endende Riemchen darstellt

Beide Paneelarten haben den Nachteil, dass die Paneele passgenau verlegt werden müssen, damit sich die erwünschte Anmutung eines Parkettbodens mit Fischgrät-Muster bzw. fischgrätartigem Muster ergibt.

Aus der gattungsbildenden CH 446 679 A sind Paneele bekannt, welche an ihrer vom Untergrund abgewandten Sichtfläche ein Dekor aufweisen, welches parallelogrammförmige und schräg zu den Längsseiten des Paneels verlaufende Riemchen umfasst.

Aus der WO 02/090129 A1 sind mit einer Oberflächenstruktur versehene Paneele bekannt, welche sich beim Verlegen mit gleichartigen Paneelen zu einem gesamtheitlichen Erscheinungsbild zusammenschließen können.

Aus der WO 2004/063491 A1 sind Paneele bekannt, welche in einer Weise verlegt werden können, dass sich in ihrer Zusammenwirkung ein Fischgrätmuster ergibt.

Ferner sei auf die WO 2006/067642 A2 hingewiesen.

Demgegenüber ist es Aufgabe der vorliegenden Erfindung, zum Verkleiden eines Untergrunds bestimmte Paneele bereitzustellen, welche einerseits die Anmutung eines fischgrätartigen Musters bieten und andererseits einfach zu verlegen sind.

Diese Aufgabe wird erfindungsgemäß durch Paneele gemäß Anspruch 1 gelöst. Durch diese Maßnahme braucht dann, wenn beim Verlegen eine neue Paneelreihe an eine bereits verlegte Paneelreihe angefügt wird, nicht mehr auf Passgenauigkeit geachtet zu werden. Aufgrund der unterschiedlichen Riemchenbreiten wird es nämlich ohnehin nicht mehr möglich sein, die Stoßlinien benachbarter Riemchen der Paneele der bereits verlegten Paneelreihe zu den Stoßlinien benachbarter Riemchen der Paneele der neu zu verlegenden Paneelreihe passgenau auszurichten. Zu einer derartigen passgenauen Ausrichtung wird es vielmehr allenfalls noch zufällig kommen können. Insgesamt ergibt sich somit ein unregelmäßiges, aber gleichwohl fischgrätartiges Verlegemuster.

Grundsätzlich ist es denkbar, dass die Riemchen ein beliebiges Dekor aufweisen. Im Extremfall kann das Dekor jedes Riemchens einer anderen Dekorklasse entspringen. Im Zusammenhang mit der vorliegenden Erfindung werden die Dekore zweier Riemchen dann als einer anderen Dekorklasse angehörend angesehen, wenn sie ein Material einer anderen Materialart darstellen, beispielsweise Naturstein, Holz, Kunststoff, Metall und dergleichen mehr.

Da fischgrätartige Verlegemuster allerdings hauptsächlich von Parkettfußböden her bekannt sind, und Parkettfußböden üblicherweise aus der Materialart Holz hergestellt sind, ist es bevorzugt, wenn alle Riemchen ein Dekor der gleichen Dekorklasse darstellen, beispielsweise alle Riemchen ein Holzdekor darstellen.

Nicht nur dann, aber auch dann, wenn alle Riemchen ein Dekor der gleichen Dekorklasse aufweisen, ist es vorteilhaft, dass wenigstens zwei Riemchen, vorzugsweise wenigstens zwei Gruppen von Riemchen, einen voneinander verschiedenen Dekortyp aufweisen. Gemäß dem Verständnis der vorliegenden Erfindung unterscheiden sich Dekortypen einer Dekorklasse dadurch voneinander, dass sie unterschiedliche Materialien der gleichen Materialart darstellen, beispielsweise die Materialien Eichenholz, Buchenholz, Kirschbaumholz und dergleichen der Materialart Holz oder die Materialien Granit, Marmor und dergleichen der Materialart Naturstein. Es versteht sich von selbst, dass die Dekore eines Dekortyps sich hinsichtlich der spezifisch dargestellten Holzmaserung oder Steinstruktur voneinander unterscheiden können. Durch diese Maßnahme kann die Variabilität des Erscheinungsbilds des Untergrundbelags weiter erhöht werden.

Dem gleichen Ziel dient auch die Maßnahme, dass wenigstens zwei Riemchen, vorzugsweise wenigstens zwei Gruppen von Riemchen, eine voneinander verschiedene Färbung aufweisen, und dies selbst dann, wenn das Dekor der Riemchen ansonsten der gleichen Dekorklasse und dem gleichen Dekortyp angehören.

Zur Erzielung des fischgrätartigen Erscheinungsbilds wird in Weiterbildung der Erfindung ferner vorgeschlagen, dass die beiden anderen Seiten des Parallelogramms mit der Längsrichtung des Paneels einen Winkel von zwischen etwa 30° und etwa 60°, vorzugsweise etwa 45°, einschließen.

Um das Erscheinungsbild des Dekors weiter verbessern zu können, ist erfindungsgemäß vorgesehen, dass zwei einander benachbart angeordnete Riemchen mittels einer optischen Fuge voneinander getrennt sind.

Zur Erhöhung des realitätsnahen Eindrucks des fischgrätartigen Musters des aus einer Mehrzahl von Paneelen gebildeten Untergrundbelags, wird in Weiterbildung der Erfindung vorgeschlagen, dass das Dekor den Kurzseiten des Paneels benachbart derart ausgebildet ist, dass dann, wenn zwei identisch ausgebildete und mit dem identischen Dekor versehene Paneele mit ihren Kurzseiten aneinander anstoßen, die Dekore der beiden Paneele ineinander übergehen. An dieser Stelle sei darauf hingewiesen, dass die in die Kurzseiten des Paneels einmündenden Riemchen aufgrund der Tatsache, dass sie auf jedem der beiden aneinander angrenzenden Paneele nur teilweise dargestellt sind, die Gestalt eines rechtwinkligen Dreiecks, eines Trapezes oder eines Fünfecks haben, das sich ergibt, wenn man von einem Parallelogramm mittels einer zur Kurzseite parallel verlaufenden Geraden ein rechtwinkliges Dreieck abtrennt.

Um den Übergang zwischen den Dekoren der beiden mit ihren Kurzseiten aneinander anliegenden Paneele möglichst unauffällig zu gestalten, kann eine ganze Reihe von Maßnahmen ergriffen werden:
Erstens ist erfindungsgemäß vorgesehen, dass die optische Fuge zwischen zwei in die Kurzseite des Paneels einmündenden Riemchen in einem vorbestimmten Abstand vor der Kurzseite des Paneels endet. Hierdurch kann ein Sprung der optischen Fugen zweier mit ihren Kurzseiten aneinander anliegenden Paneele, der einen etwaigen Versatz betonen würde, vermieden werden.

Zweitens kann vorgesehen sein, dass zwei einander benachbarte und in die Kurzseite des Paneels einmündende Riemchen den gleichen Dekortyp aufweisen. Beispielsweise fällt ein Versatz dann, wenn zwei ein Eichenholz-Dekor darstellende Riemchen nebeneinander angeordnet sind, weniger auf als dann, wenn ein Riemchen mit Eichenholz-Dekor neben einem Riemchen mit Ahornholz-Dekor angeordnet ist.

Und drittens kann vorgesehen sein, dass die Färbungen zweier einander benachbarter und in die Kurzseite des Paneels einmündender Riemchen zumindest in einem der Stoßlinie der beiden Riemchen und der Kurzseite des Paneels benachbarten Abschnitts ineinander übergehen.

Durch die vorstehend erläuterten Maßnahmen können insbesondere Fertigungstoleranzen kaschiert werden, die im mehrstufigen Fertigungsprozess der Paneele durch das nur schwer zu kontrollierende Papierwachstum infolge des Imprägnierens des Dekorpapiers mit Kunstharz und des Trocknens des Dekorpapiers nach dessen Aufbringen auf die Basisplatte, durch das Schneiden und Fräsen und dergleichen Fertigungsschritte verursacht werden.

In Weiterbildung der Erfindung ist es denkbar, dass auf der vom Untergrund abgewandten Seite des Paneels ein Dekorpapier vorgesehen ist, welches mit dem Holzdekor bedruckt ist. Um bei Verwendung eines Dekorpapiers dem so genannten "Schüsseln" des Paneels zumindest entgegenwirken, wenn dieses "Schüsseln" nicht gar vollständig verhindern zu können, ist vorteilhaft, wenn auf der dem Untergrund zugewandten Seite des Paneels ein Gegenzugpapier angeordnet ist.

Alternativ zur Verwendung eines Dekorpapiers ist es jedoch auch denkbar, dass auf der vom Untergrund abgewandten Seite des Paneels eine Grundierung vorgesehen ist, welche mit dem Holzdekor bedruckt ist.

Um das Holzdekor vor Abrieb und dergleichen Beschädigungen schützen zu können, wird vorgeschlagen, dass auf der vom Untergrund abgewandten Seite des mit dem Holzdekor bedruckten Dekorpapiers oder der mit dem Holzdekor bedruckten Grundierung eine, vorzugsweise transparente, Schutzschicht vorgesehen ist. Die Schutzschicht kann beispielsweise von einem Kunstharz gebildet sein.

Zur Erzielung eines natürlichen Erscheinungsbilds wird ferner vorgeschlagen, dass das Paneel mit einer zur Maserung des Holzdekors im Wesentlichen synchronen Oberflächenstruktur versehen ist. Die Oberflächenstruktur kann beispielsweise mittels eines Prägewerkzeugs, vorzugsweise eines Prägestempels oder einer Prägewalze, in die Schutzschicht eingebracht sein. Dabei können zumindest einige der Eindrückungen der Oberflächenstruktur ein Tiefenprofil aufweisen.

Wie dies an sich bekannt ist, kann das Basiselement des Paneels von einer MDF-Platte (Medium Density Fiberboard) oder/und einer HDF-Platte (High Density Fiberboard) oder/und einer OSB-Platte (Oriented Strand Board) oder/und einer Spanplatte oder/und einer Sperrholzplatte oder/und einer Tischlerplatte oder/und einer Gipsfaserplatte oder/und einer Kunststoffplatte, beispielsweise einer PVC-Platte, insbesondere so genannten LVTs (Luxury Vinyl Tiles), gebildet sein.

Das erfindungsgemäße Paneel kann beispielsweise als Fußbodenpaneel oder als Wandverkleidungspaneel oder als Deckenverkleidungspaneel oder als Möbelplatte oder als Arbeitsplatte verwendet werden.

Ferner kann die Länge des Paneels zwischen 500 mm und 2800 mm oder/und die Breite des Paneels zwischen 180 mm und 800 mm oder/und die Dicke des Paneels zwischen 1 mm und 25 mm betragen.

Schließlich kann das Paneel zur Ermöglichung einer Verbindung mit anderen Paneelen an seinen beiden langen Seitenrändern oder/und seinen beiden kurzen Seitenrändern mit Verbindungselementen des Nut-und-Feder-Typs ausgebildet sein.

Gemäß einem weiteren Gesichtspunkt betrifft die Erfindung ein Paneelgebinde, umfassend eine Mehrzahl von erfindungsgemäßen Paneelen, bei welchem der schräge Verlauf der Riemchen wenigstens eines der Paneele, vorzugsweise etwa der Hälfte der Paneele, und der schräge Verlauf wenigstens eines anderen Paneels, vorzugsweise ebenfalls etwa der Hälfte der Paneele, zueinander entgegengesetzt orientiert sind. Mit anderen Worten verlaufen bei Draufsicht auf das Dekor des Paneels die einen Schrägen, je nachdem, welche der beiden Längserstreckungsrichtungen des Paneels man als die Bezugslängsrichtung wählt, nach vorne rechts bzw. hinten links, während die anderen Schrägen nach vorne links bzw. hinten rechts verlaufen. Dabei kann ferner vorgesehen sein, dass der Winkel der Schräge des einen wenigstens einen Paneels und der Winkel der Schräge des anderen wenigstens einen Paneels den gleichen Betrag aufweisen.

Die Erfindung wird im Folgenden anhand der beigefügten Zeichnung an einem Ausführungsbeispiel näher erläutert werden. Es stellt dar:
- Figur 1: zwei erfindungsgemäße Paneele, die mit ihren langen Recht-ecksseiten aneinander anliegen;
- Figur 2: zwei erfindungsgemäße Paneele, die mit ihren kurzen Recht-ecksseiten aneinander anliegen;
- Figur 3: eine vergrößerte Darstellung des Übergangsbereichs zweier Paneele;
- Figur 4: mehrere nebeneinander angeordnete Verlegereihen erfin-dungsgemäßer Paneele;
- Figur 5: eine schematische Darstellung eines Querschnitts durch ein erfindungsgemäßes Paneel; und
- Figur 6: eine schematische Darstellung eines Querschnitts durch ein alternatives erfindungsgemäßes Paneel.

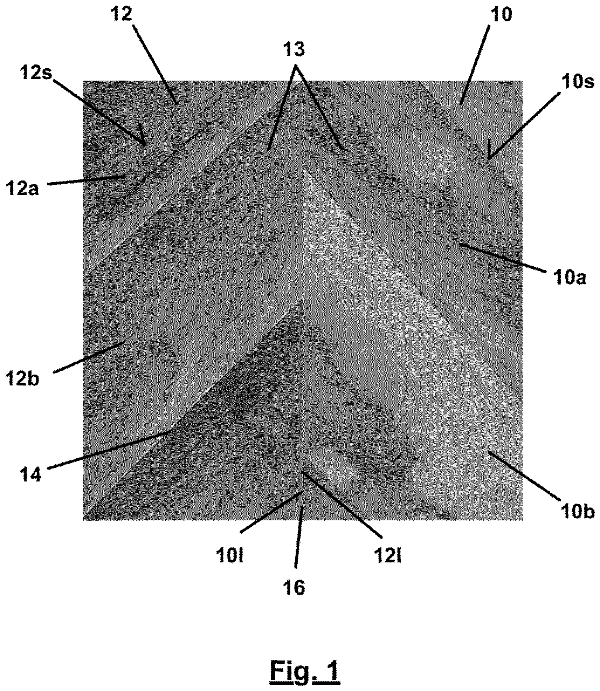

Figur 1 zeigt einen Ausschnitt aus zwei erfindungsgemäßen Paneele 10 und 12, die in verlegtem Zustand mit ihren Längsseiten 10l 12l aneinander anliegen, so dass zwischen den beiden Paneelen 10, 12 eine Verlegefuge 16 gebildet ist.

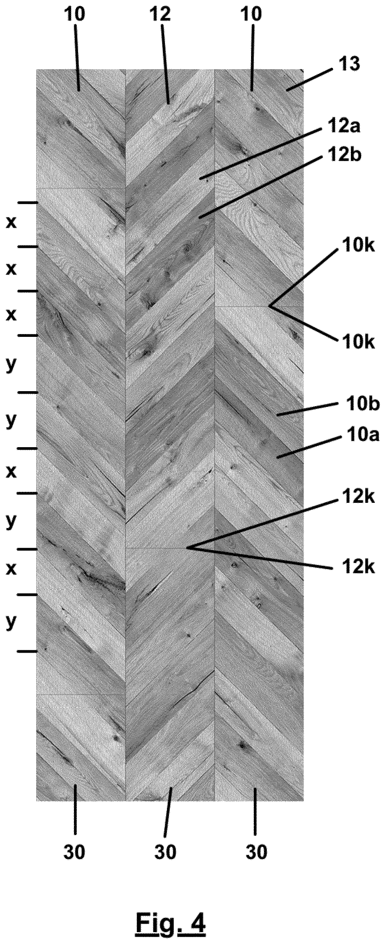

Beide Paneele 10, 12 weisen an ihrer in Figur 1 dargestellten Sichtseite 10s, 12s ein Dekor 13 auf, das eine Mehrzahl von parallelogrammförmigen Riemchen 10a, 10b bzw. 12a, 12b darstellt. In dem in Figur 1 dargestellten Ausführungsbeispiel sind die Dekore der Riemchen 10a, 10b bzw. 12a, 12b allesamt Holzdekore, die unterschiedliche Holzarten in unterschiedlichen Färbungen darstellen. Ferner weisen die Riemchen 10a und 10b bzw. 12a und 12b eine unterschiedliche Breite b₁₀ₐ und b_{10b} bzw. b₁₂ₐ und b_{12b} auf, wobei die Breite b_{10b} größer ist als die Breite b₁₀ₐ und die Breite b_{12b} größer ist als die Breite b₁₂ₐ ist (siehe auch Figur 4). Zur Verdeutlichung der Erstreckung der einzelnen Riemchen 10a, 10b und 12a, 12b der beiden Paneele 10 und 12 zeigt das Dekor zwischen einander benachbarten Riemchen jeweils eine optische Fugen 14 dar.

Wie bereits erwähnt, sind die Riemchen 10a, 10b und 12a, 12b der beiden Paneele 10 und 12 jeweils als Parallelogramme ausgebildet, und zwar als Parallelogramme, deren Innenwinkel etwa 45° und etwa 135° betragen. Daher treffen auch die optischen Fugen 14 jeweils unter einem Winkel von etwa 45° auf die Verlegefuge 16.

In Figur 4 erkennt man zudem, dass die Riemchen 10a, 10b und 12a, 12b der beiden Paneele 10 und 12 zueinander gegenläufig orientiert sind. Während die Riemchen der Paneele 10 in Ansicht der Figur 4 von unten rechts nach oben links verlaufen, verlaufen die Riemchen der Paneele 12 in Ansicht der Figur 4 von unten links nach oben rechts. Hierdurch entsteht die Optik eines fischgrätartigen Verlegemusters. Durch die verschiedenen Breiten der einzelnen Riemchen 10a, 10b und 12a, 12b der beiden Paneele 10 und 12 werden an der Verlegefuge 16 nur ausnahmsweise optische Fugen 14 des ersten Paneels 10 mit optischen Fugen 14 des zweiten Paneels 12 zusammentreffen. Dies verleiht dem fischgrätartigen Velegemuster ein rustikales Aussehen. Durch die vorstehend bereits erwähnte Tatsache, dass die Holzdekore der Riemchen unterschiedliche Holzarten in unterschiedlichen Färbungen darstellen wird der rustikale Charakter des Dekors weiter verstärkt (siehe auch Figur 4).

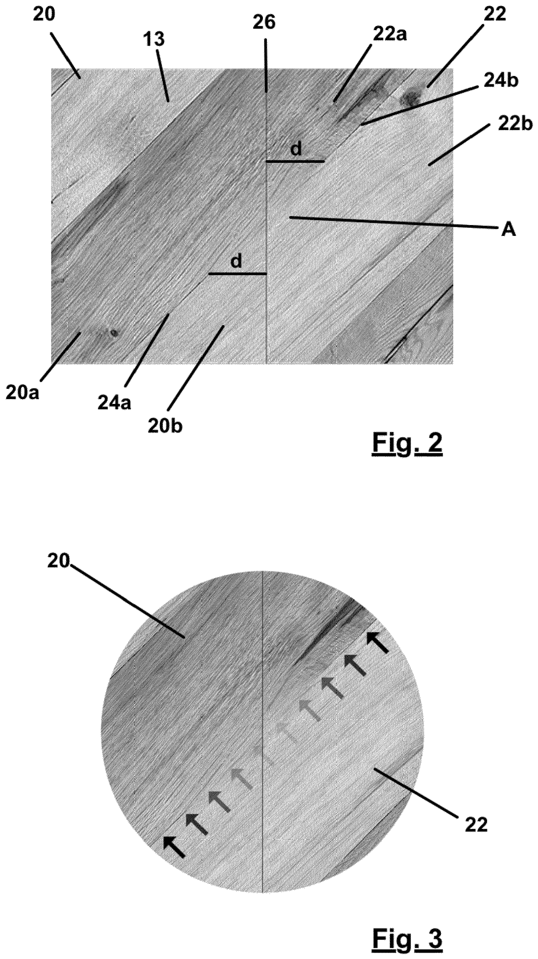

Wie man insbesondere in Figur 4 erkennt, ist das Dekor 13 in den kurzen Längsseiten 10k, 12k der Paneele 10 und 12 benachbarten Dekorabschnitten derart ausgebildet, dass die Dekore 13 zweier einander benachbart angeordneter Paneele 10 bzw. zweier einander benachbart angeordneter Paneele 12 passgenau ineinander übergehen. Durch welche Maßnahmen dies erreicht werden kann, wird nachstehend mit Bezug auf die Figuren 2, 3a und 3b näher erläutert werden:
Figur 2 zeigt zwei erfindungsgemäße Paneele 20 und 22, die mit ihren kurzen Rechteckseiten 20k, 22k entlang einer Verlegefuge 26 aneinander anliegen. Das Paneel 20 weist wiederum ein Dekor 13 auf, bei welchem zwei sichtbare Riemchen mit 20a und 20b bezeichnet sind, während das Paneel 22 ein Dekor 13 aufweist, bei dem zwei sichtbare Riemchen mit 22a und 22b bezeichnet sind. Sowohl die Riemchen mit 20a und 20b als auch die Riemchen mit 22a und 22b grenzen an die kurzen Rechteckseiten 20k bzw. 22k an.

Die Dekore 13 der beiden Paneele 20 und 22 sind derart gestaltet, dass in dem gezeigten verlegten Zustand das Riemchen 20a in das Riemchen 22a passgenau und optisch fließend in das Riemchen 22a übergeht und das Riemchen 20b passgenau und optisch fließend in das Riemchen 22b übergeht, und zwar derart, dass die Riemchen 20a und 22a bzw. 20b und 22b zusammen jeweils die Anmutung eines Parallelogramm-Riemchen ergeben.

Die Paare von Riemchen 20a und 20b sowie 22a und 22b sind jeweils von optischen Fugen 24a und 24b getrennt. Um die Anmutung eines fischgrätartigen Verlegemusters auch dann sicherzustellen, wenn beim Verlegen der beiden Paneele 20 und 22 ein leichter Versatz in Längsrichtung vorliegt, das heißt die optischen Fugen 24a, 24b an der Verlegefuge 26 nicht passgenau aufeinander treffen, ist die Riemchen-Struktur der Verlegefuge 26 benachbart "aufgeweicht". Dieser Bereich ist in Figur 2 mit dem Bezugszeichen "A" bezeichnet.

In diesem Übergangsbereich A treten erstens die optischen Fugen 24a und 24b optisch zurück und verschwinden der Verlegefuge 26 benachbart sogar ganz, was in Figur 3 durch Pfeile angedeutet ist, welche in unterschiedlichen Graustufen gehalten sind. Die optischen Fugen 24a und 24b enden somit in einem vorbestimmten Abstand d vor der Verlegefuge 26. Zweitens stellt das Holzdekor der Riemchen 20a und 20b bzw. 22a und 22b die gleiche Holzart dar. Und drittens gehen die Farben der Dekore der Riemchen 20a und 20b bzw. 22a und 22b im Übergangsbereich A ineinander über.

Hierdurch liegt an der Verlegefuge 26 keine durchgehende optische Fuge des Dekors und auch keine deutlich sichtbare Stoßlinie zwischen den beiden Riemchen 20a, 22a und 20b, 22b vor. Da das menschliche Auge die beiden optischen Fugen 24a und 24b durch den "aufgeweichten Bereich" A hindurch nicht exakt aufeinander extrapolieren kann, wird ein leichter Versatz der beiden Paneele 20 und 22 gegeneinander nicht auffallen und es wird der Eindruck vorherrschen, dass es sich um über die Paneelgrenzen durchgehende Riemchen handelt.

Figur 4 zeigt mehrere Verlegereihen 30 von erfindungsgemäßen Paneelen 10 und 12, die nebeneinander angeordnet sind, um einen durchgehenden Untergrundbelag zu bilden, beispielsweise einen durchgehenden Fußbodenbelag. Die Reihen sind abwechselnd aus Paneelen 10 bzw. Paneelen 12 gebildet, die sich in der Orientierung ihrer Riemchen 10a, 10b bzw. 12a, 12b unterscheiden. Auf diese Weise entsteht das angesprochene Verlegemuster mit fischgrätartiger Anmutung. Es stellt sich ferner das im Zusammenhang mit Figur 1 diskutierte rustikale Verlegebild ein, da die optischen Fugen 14 zwischen den einzelnen Riemchen entlang der Verlegefugen 16 an den Längsseiten der Paneele 10, 12 nur ausnahmsweise zusammentreffen. Es sei zuletzt noch darauf hingewiesen, dass bei den in Figur 4 gezeigten Paneelen 10, 12 lediglich zwei verschiedene Riemchenbreiten für die einzelnen Riemchen verwendet werden, nämlich eine Breite x und eine Breite y. Riemchen der Breite x und Riemchen der Breite y sind allerdings nicht streng abwechselnd angeordnet, sondern in unregelmäßiger Abfolge, um den angesprochenen rustikalen Eindruck zu verstärken. Hierdurch können zudem auch die Paneele 10, 12 der einzelnen Reihen 30 in Längsrichtung beliebig gegeneinander versetzt sein, ohne dass sich der Gesamteindruck des Belags ändern würde.

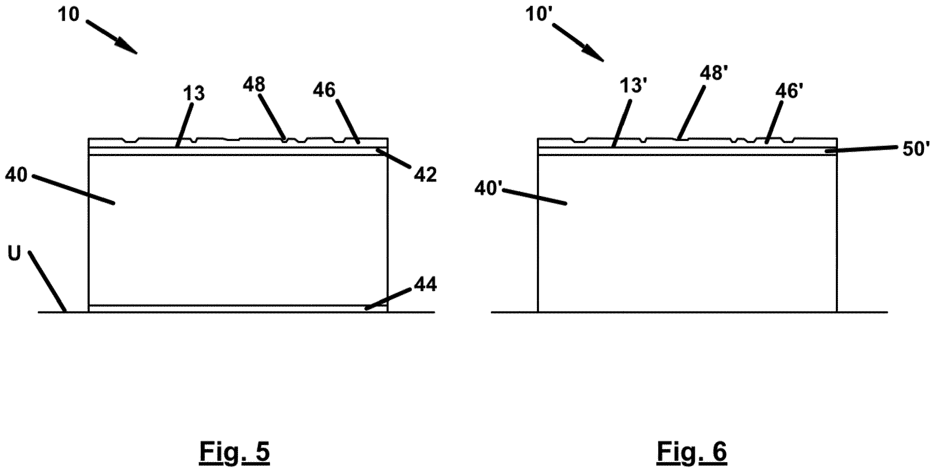

Figur 5 zeigt eine schematische Darstellung eines Querschnitts durch ein erstes erfindungsgemäßes Paneel 10, beispielsweise das Paneel aus Figur 1. Daher werden soweit möglich auch gleiche Bezugszeichen wie in Figur 1 verwendet. Das Paneel umfasst eine Basisplatte 40. Auf die Oberseite und die Unterseite der Basisplatte 40 ist jeweils eine Lage 42 bzw. 44, aufgebracht, wobei die vom Untergrund U entfernt angeordnete Lage 42 mit einem Dekor 13 bedruckt ist. Die Lage 42 wird folglich als Dekorlage bezeichnet, während die der Dekorlage 42 gegenüberliegende Lage 44 als Gegenzuglage bezeichnet wird, da sie die Aufgabe hat, Spannungen auszugleichen, die in dem Paneel 10 durch eine Schrumpfung oder Ausdehnung der Dekorlage 42 auftreten können, und somit dafür sorgt, dass das Paneel 10 sich nicht aufwölbt.

Auf die Dekorlage 42 ist schließlich eine transparente Schutzschicht 46 aufgebracht, die beispielsweise aus einem Kunstharz oder dergleichen gebildet sein kann. Auf der Oberseite 12 des Paneels 10 kann ferner eine Oberflächenstruktur 48 in die Schutzschicht 46 eingeprägt, die vorzugsweise zu dem auf die Dekorlage 42 aufgedruckten Dekor 13 im Wesentlichen synchron ausgebildet sein kann. Diese Oberflächenstruktur 48 erhöht durch ihre Haptik und Rauigkeit die natürliche holzähnliche Anmutung des Paneels 10.

Figur 6 zeigt eine schematische Darstellungen eines Querschnitts durch ein alternatives erfindungsgemäßes Paneel 10'. In diesem wird darauf verzichtet, eine gesonderte Dekorlage auf das Basismaterial 40' aufzubringen, sondern das Basismaterial wird lediglich mit einer Grundierung 50' versehen, die direkt mit dem Dekor 13' bedruckt werden kann. Analog zu dem in Figur 5 gezeigten Paneel 10 ist auch das Paneel 10' aus Figur 6 mit einer Schutzschicht 46' und einer in diese eingeprägten Oberflächenstruktur 48' versehen.

Die Basisplatte 40 bzw. 40' kann beispielsweise aus MDF (Medium Density Fiberboard), HDF (High Density Fiberboard), OSB (Oriented Strand Board), einer Spanplatte, PVC (Polyvinylchlorid), insbesondere LVT (Luxury Vinyl Tiles) oder einem anderen geeigneten Material hergestellt sein.

Bei Verwendung von MDF, HDF, OSB oder einer Spanplatte als Material der Basisplatte 40 können die Lagen 42, 44 vorzugsweise aus Papier gebildet sein, bei Verwendung von PVC vorzugsweise aus Kunststoff. Ferner können sie mit der Basisplatte beispielsweise unter Verwendung von Kunstharz verbunden sein.

Abschließend sei noch darauf hingewiesen, dass die Dekore nicht nur unter Verwendung von Druckzylindern auf die Dekorlage 42 bzw. die Grundierung 50' aufgebracht werden kann, sondern auch unter Verwendung digitaler Druckverfahren, insbesondere des Inkjet-Drucks.

Es versteht sich von selbst, dass das Paneel 12 vorzugsweise den identischen Aufbau wie das Paneel 10 bzw. 10' aufweisen kann.

## Patentansprüche

1. Rechteckiges und zum Verkleiden eines Untergrunds bestimmtes Paneel (10, 12), welches ein Basiselement (40) umfasst, das an seiner vom Untergrund (U) abgewandten Sichtfläche ein Dekor (13) aufweist,
wobei das Dekor (13) eine Mehrzahl von parallelogramm-förmigen Riemchen (10a, 10b und 12a, 12b) darstellt, wobei das eine Paar von Parallelogramm-Seiten jeweils einen Abschnitt der Längsseite des Paneels (10, 12) bildet, während die beiden anderen Seiten des Parallelogramms zur Längsrichtung des Paneels (10, 12) schräg verläuft,
**dadurch gekennzeichnet, dass** wenigstens zwei Riemchen (10a, 10b und 12a, 12b) eine voneinander verschiedene Riemchenbreite (x, y) aufweisen,
dass zwei einander benachbart angeordnete Riemchen (10a, 10b und 12a, 12b) mittels einer optischen Fuge (14) voneinander getrennt sind, und
dass die optische Fuge (14) zwischen zwei in die Kurzseite des Paneels einmündenden Riemchen (20a, 20b, 22a, 22b) in einem vorbestimmten Abstand (d) vor der Kurzseite des Paneels endet.

2. Paneel nach Anspruch 1,
**dadurch gekennzeichnet, dass** alle Riemchen (10a, 10b und 12a, 12b) ein Dekor (13) dergleichen Dekorklasse darstellen, beispielsweise alle Riemchen (10a, 10b und 12a, 12b) ein Holzdekor darstellen.

3. Paneel nach Anspruch 1 oder 2,
**dadurch gekennzeichnet, dass** wenigstens zwei Riemchen (10a, 10b und 12a, 12b) einen voneinander verschiedenen Dekortyp aufweisen.

4. Paneel nach einem der Ansprüche 1 bis 3,
**dadurch gekennzeichnet, dass** wenigstens zwei Riemchen (10a, 10b und 12a, 12b) eine voneinander verschiedene Färbung aufweisen.

5. Paneel nach einem der Ansprüche 1 bis 4,
**dadurch gekennzeichnet, dass** die beiden andere Seiten des Parallelogramms mit der Längsrichtung des Paneels (10, 12) einen Winkel von zwischen etwa 30° und etwa 60°, vorzugsweise etwa 45°, einschließen.

6. Paneel nach einem der Ansprüche 1 bis 5,
**dadurch gekennzeichnet, dass** das Dekor (13) den Kurzseiten des Paneels (10, 12) benachbart derart ausgebildet ist, dass dann, wenn zwei identisch ausgebildete und mit dem identischen Dekor (13) versehene Paneele (10, 12) mit ihren Kurzseiten aneinander anstoßen, die Dekore (13) der beiden Paneele (10, 12) ineinander übergehen.

7. Paneel nach einem der Ansprüche 1 bis 6,
**dadurch gekennzeichnet, dass** zwei einander benachbarte und in die Kurzseite des Paneels einmündende Riemchen (20a, 20b, 22a, 22b) den gleichen Dekortyp aufweisen.

8. Paneel nach einem der Ansprüche 1 bis 7,
**dadurch gekennzeichnet, dass** die Färbungen zweier einander benachbarter und in die Kurzseite des Paneels einmündender Riemchen (20a, 20b, 22a, 22b) zumindest in einem der Stoßlinie der beiden Riemchen (20a, 20b, 22a, 22b) und der Kurzseite des Paneels benachbarten Abschnitts ineinander übergehen.

9. Paneel nach einem der Ansprüche 1 bis 8,
**dadurch gekennzeichnet, dass** auf der vom Untergrund (U) abgewandten Seite des Paneels (10) eine Dekorlage (42), beispielsweise ein Dekorpapier, vorgesehen ist, welche mit dem Holzdekor bedruckt ist.

10. Paneel nach einem der Ansprüche 1 bis 8,
**dadurch gekennzeichnet, dass** auf der vom Untergrund (U) abgewandten Seite des Paneels (10') eine Grundierung (50) vorgesehen ist, welche mit dem Holzdekor bedruckt ist.

11. Paneel nach Anspruch 9 oder 10,
**dadurch gekennzeichnet, dass** auf der vom Untergrund (U) abgewandten Seite der mit dem Holzdekor bedruckten Dekorlage (42) oder der mit dem Holzdekor bedruckten Grundierung (50) eine, vorzugsweise transparente, Schutzschicht (46) vorgesehen ist.

12. Paneel nach einem der Ansprüche 1 bis 11,
**dadurch gekennzeichnet, dass** das Paneel mit einer zur Maserung des Holzdekors im Wesentlichen synchronen Oberflächenstruktur (48) versehen ist.

13. Paneelgebinde, umfassend eine Mehrzahl von Paneelen nach einem der Ansprüche 1 bis 11,
**dadurch gekennzeichnet, dass** der schräge Verlauf der Riemchen wenigstens eines der Paneele (10), vorzugsweise etwa der Hälfte der Paneele, und der schräge Verlauf wenigstens eines anderen Paneels (12), vorzugsweise ebenfalls etwa der Hälfte der Paneele, zueinander entgegengesetzt orientiert sind.

14. Paneelgebinde nach Anspruch 13,
**dadurch gekennzeichnet, dass** der Winkel der Schräge des einen wenigstens einen Paneels (10) und der Winkel der Schräge des anderen wenigstens einen Paneels (12) den gleichen Betrag aufweisen.

## Claims

1. Rectangular panel (10, 12) intended for overlaying a subsurface, comprising a base element (40) that has a decorative pattern (13) on the visible face thereof, which faces away from the subsurface (U),
the decorative pattern (13) constituting a plurality of parallelogram-shaped strips (10a, 10b and 12a, 12b), one pair of parallelogram sides forming a portion of the long side of the panel (10, 12) in each case, while the two other sides of the parallelogram extend diagonally to the longitudinal direction of the panel (10, 12),
**characterised in that** at least two strips (10a, 10b and 12a, 12b) have strip widths (x, y) that differ from one another,
**in that** two adjacent strips (10a, 10b and 12a, 12b) are separated from one another by means of a visible joint (14), and
**in that** the visible joint (14) ends between two strips (20a, 20b, 22a, 22b) that lead to the short side of the panel and at a predefined distance (d) from the short side of the panel.

2. Panel according to claim 1,
**characterised in that** all the strips (10a, 10b and 12a, 12b) display a decorative pattern (13) from the same group of decorative patterns, for example all the strips (10a, 10b and 12a, 12b) display a wood pattern.

3. Panel according to either claim 1 or claim 2,
**characterised in that** at least two strips (10a, 10b and 12a, 12b) have decorative pattern types that differ from one another.

4. Panel according to any of claims 1 to 3,
**characterised in that** at least two strips (10a, 10b and 12a, 12b) are of colours that differ from one another.

5. Panel according to any of claims 1 to 4,
**characterised in that** the two other sides of the parallelogram form an angle of between approximately 30° and approximately 60°, preferably approximately 45°, with the longitudinal direction of the panel (10, 12).

6. Panel according to any of claims 1 to 5,
**characterised in that** the decorative pattern (13) adjacent to the short sides of the panel (10, 12) is designed such that when the short sides of two identical panels (10, 12) that have an identical decorative pattern (13) adjoin one another, the decorative patterns (13) of the two panels (10, 12) merge with one another.

7. Panel according to any of claims 1 to 6,
**characterised in that** two adjacent strips (20a, 20b, 22a, 22b) that lead to the short side of the panel have the same decorative pattern type.

8. Panel according to any of claims 1 to 7,
**characterised in that** the colours of two adjacent strips (20a, 20b, 22a, 22b) that lead to the short side of the panel merge with one another at least in a portion that is adjacent to the joining line of the two strips (20a, 20b, 22a, 22b) and to the short side of the panel.

9. Panel according to any of claims 1 to 8,
**characterised in that** a decorative layer (42), for example decorative paper, that is imprinted with the wood pattern, is provided on the face of the panel (10) that faces away from the subsurface (U).

10. Panel according to any of claims 1 to 8,
**characterised in that** a primer layer (50) that is imprinted with the wood pattern is provided on the face of the panel (10') that faces away from the subsurface (U).

11. Panel according to either claim 9 or claim 10,
**characterised in that** a preferably transparent protective layer (46) is provided on the face of the wood-pattern-imprinted decorative layer (42) or of the wood-pattern-imprinted primer layer (50) that faces away from the subsurface (U).

12. Panel according to any of claims 1 to 11,
**characterised in that** the panel is provided with a surface structure (48) that is substantially synchronous with the grain of the wood pattern.

13. Panel arrangement comprising a plurality of panels according to any of claims 1 to 11,
**characterised in that** the diagonal extension of the strips of at least one of the panels (10), preferably approximately half of the panels, and the diagonal extension of at least one other panel (12), preferably also approximately half of the panels, are oriented so as to face in the opposite direction to one another.

14. Panel arrangement according to claim 13,
**characterised in that** the angle of the inclination of one at least one panel (10) and the angle of inclination of the other at least one panel (12) are equal.

## Revendications

1. Panneau (10, 12), rectangulaire et destiné à habiller un substrat, qui comprend un élément de base (40) qui, sur sa face visible éloignée du substrat (U), présente un décor (13),
le décor (13) représentant une pluralité de plaquettes (10a, 10b et 12a, 12b) en forme de parallélogramme, une paire de côtés du parallélogramme formant respectivement un tronçon du côté longitudinal du panneau (10, 12) tandis que les deux autres côtés du parallélogramme sont disposés obliquement à la direction longitudinale du panneau (10, 12),
**caractérisé en ce qu'**au moins deux plaquettes (10a, 10b et 12a, 12b) présentent une largeur de plaquette (x, y) différente l'une de l'autre,
**en ce que** deux plaquettes (10a, 10b et 12a, 12b) disposées au voisinage l'une de l'autre sont séparées l'une de l'autre au moyen d'une fente de séparation (14) optique, et
**en ce que** la fente de séparation (14) optique se termine entre deux plaquettes (20a, 20b et 22a, 22b) débouchant dans le côté court du panneau à une distance (d) prédéfinie devant le côté court du panneau.

2. Panneau selon la revendication 1,
**caractérisé en ce que** toutes les plaquettes (10a, 10b et 12a, 12b) représentent un décor (13) de la même classe de décor, par exemple toutes les plaquettes (10a, 10b et 12a, 12b) représentent un décor bois.

3. Panneau selon la revendication 1 ou 2,
**caractérisé en ce qu'**au moins deux plaquettes (10a, 10b et 12a, 12b) présentent un type de décor différent l'un de l'autre.

4. Panneau selon l'une des revendications 1 à 3,
**caractérisé en ce qu'**au moins deux plaquettes (10a, 10b et 12a, 12b) présentent une couleur différente l'une de l'autre.

5. Panneau selon l'une des revendications 1 à 4,
**caractérisé en ce que** les deux autres côtés du parallélogramme forment avec la direction longitudinale du panneau (10, 12) un angle compris entre environ 30° et environ 60°, de préférence d'environ 45°.

6. Panneau selon l'une des revendications 1 à 5,
**caractérisé en ce que** le décor (13) au voisinage des côtés courts du panneau (10, 12) est constitué de telle sorte que, quand deux panneaux (10, 12) de constitution identique et munis du décor (13) identique butent l'un contre l'autre par leurs côtés courts, les décors (13) des deux panneaux (10, 12) se fondent l'un dans l'autre.

7. Panneau selon l'une des revendications 1 à 6,
**caractérisé en ce que** deux plaquettes (20a, 20b et 22a, 22b) voisines l'une de l'autre et débouchant dans le côté court du panneau présentent le même type de décor.

8. Panneau selon l'une des revendications 1 à 7,
**caractérisé en ce que** les couleurs de deux plaquettes (20a, 20b et 22a, 22b) voisines l'une de l'autre et débouchant dans le côté court du panneau se fondent l'une dans l'autre au moins dans un tronçon voisin de la ligne de joint des deux plaquettes (20a, 20b et 22a, 22b) et du côté court du panneau.

9. Panneau selon l'une des revendications 1 à 8,
**caractérisé en ce que**, sur le côté du panneau (10) éloigné du substrat (U), il est prévu une nappe de décor (42), par exemple un papier décor, qui est imprimée avec le décor bois.

10. Panneau selon l'une des revendications 1 à 8,
**caractérisé en ce que**, sur le côté du panneau (10') éloigné du substrat (U), il est prévu une couche de fond (50) qui est imprimée avec le décor bois.

11. Panneau selon la revendication 9 ou 10,
**caractérisé en ce que**, sur le côté éloigné du substrat (U) de la nappe de décor (42) imprimée avec le décor bois ou de la couche de fond (50) imprimée avec le décor bois, il est prévu une pellicule de protection (46), de préférence transparente.

12. Panneau selon l'une des revendications 1 à 11,
**caractérisé en ce que** le panneau est muni d'une structure superficielle (48) essentiellement synchrone avec la veinure du décor bois.

13. Botte de panneaux, comprenant une pluralité de panneaux selon l'une des revendications 1 à 11,
**caractérisée en ce que** l'allure oblique des plaquettes d'au moins un des panneaux (10), de préférence d'environ la moitié des panneaux, et l'allure oblique d'au moins un autre panneau (12), de préférence également d'environ la moitié des panneaux, sont orientées de façon inversée l'une par rapport à l'autre.

14. Botte de panneaux selon la revendication 13,
**caractérisée en ce que** l'angle de l'obliquité d'un panneau (10) au moins au nombre d'un et l'angle de l'obliquité de l'autre panneau (12) au moins au nombre d'un présentent la même valeur.
